# EUROPÄISCHE PATENTSCHRIFT

(11) **EP 2 966 252 B1**
(45) Veröffentlichungstag und Bekanntmachung des Hinweises auf die Patenterteilung: **14.11.2018**
(21) Anmeldenummer: 15401061.5
(22) Anmeldetag: 01.07.2015
(51) Int. Cl.: E06B 3/30, E06B 3/263

(54) **FENSTER ODER TÜR, INSBESONDERE FÜR EIN NIEDRIGENERGIE- ODER PASSIVHAUS, MIT EINEM PROFILELEMENT MIT GESCHÄUMTEM KUNSTSTOFF**
WINDOW OR DOOR, IN PARTICULAR FOR A LOW ENERGY OR PASSIVE HOUSE, WITH A PROFILE ELEMENT WITH FOAMED SYNTHETIC MATERIAL
FENÊTRE OU PORTE, EN PARTICULIER POUR UNE MAISON PASSIVE OU BASSE ÉNERGIE, DOTÉE D'UN ÉLÉMENT PROFILE À BASE DE MATIÈRE PLASTIQUE EXPANSÉE

(30) Priorität: 08.07.2014 DE 202014103135 U
(43) Veröffentlichungstag der Anmeldung: 13.01.2016
(73) Patentinhaber: Pazen Fenster + Technik GmbH, 54516 Wittlich (DE)
(72) Erfinder: Pazen, Günter, 54492 Zeltingen-Rachtig (DE)
(74) Vertreter: Kutsch, Bernd

(56) Entgegenhaltungen:
- EP-A1- 2 706 184
- FR-A1- 2 971 808

## Beschreibung

Die Erfindung betrifft ein Fenster oder eine Tür mit einem Profilelement, insbesondere in Form eines Adapterprofils, mit geschäumtem Kunststoff. Das Fenster bzw. die Tür eignet sich besonders für ein Niedrigenergiehaus oder ein Passivhaus.

### Stand der Technik

Fenster und Türen aus Holz, Kunststoff, Metall wie Aluminium oder aus einer Kombination dieser Materialien sind bekannt. Insbesondere sind auch Fenster und Türen für Niedrigenergiehäuser oder sogenannte Passivhäuser, d. h. Häuser mit einem Heizwärmebedarf von maximal 15 kWh/(m²a), bekannt, die sich durch besonders geringe Wärmedurchgangswerte auszeichnen. In dieser Hinsicht sei beispielsweise auf die Produkte der Anmelderin verwiesen, die u. a. auf der Internetseite www.enersign.com beschrieben werden. Die Wärmedurchgangswerte solcher Fenster bzw. Türen, insbesondere solcher, die für ein Gebäude vorgesehen sind, das die Anforderungen an ein KfW-Effizienzhaus 40 (EnEV 2009) oder besser erfüllen soll, werden zunehmend durch die Profile der Fenster bzw. Türen bestimmt und nicht mehr wie im bisherigen Ausmaß von den Verglasungen oder Türfüllungen.

EP 2 706 184 A1 zeigt ein Fenster für ein Niedrigenergiehaus oder ein Passivhaus mit einem Fensterprofilelement, einem weiteren Profilelement, das auch als Adapterprofil bezeichnet werden kann, und einem Verglasungsbauelement. Das Verglasungsbauelement ist mit dem weiteren Profilelement und das weitere Profilelement mit dem Fensterprofilelement verbunden. Weiter ist das Verglasungsbauelement mit dem weiteren Profilelement in mindestens einem Klebebereich verklebt. Das weitere Profilelement kann ein Fiberglasprofil, eine Siebdruckplatte oder Multiplexplatte bzw. ein entsprechendes Profil, ein Polycarbonatprofil, ein PVC-Profil oder ein Polyamidprofil sein.

FR 2 971 808 A1 zeigt ein Fenster gemäß dem Oberbegriff des Anspruches 1.

Aufgabe der vorliegenden Erfindung war die Bereitstellung eines Fensters oder einer Tür mit weiter verbesserten Wärmedurchgangswerten vor allem im Rahmenbereich.

### Zusammenfassung und Vorteile der Erfindung

Die Erfindung betrifft ein Fenster oder eine Tür gemäß Anspruch 1.

Vorteilhafte Weiterbildungen der Erfindung sind Gegenstand der Unteransprüche.

Die Erfindung kann grundsätzlich gleichermaßen bei einem Fenster wie bei einer Tür eingesetzt werden, wobei dem Blendrahmen des Fensters die Türzarge oder das Türzargenprofil der Tür entspricht, und wobei dem Flügelrahmen des Fensters das Türblatt oder das Türflügelprofil der Tür entspricht. Insofern gilt das nachfolgend für ein Fenster beschriebene in analoger Weise auch für eine Tür.

In einer bevorzugten Ausführungsform der Erfindung ist bei dem erfindungsgemäßen Fenster oder der erfindungsgemäßen Tür vorgesehen, dass der geschäumte Kunststoff eine Wärmeleitfähigkeit in einem Bereich von 0,048 bis 0,07 W/mK aufweist.

In einer bevorzugten Ausführungsform der Erfindung ist bei dem erfindungsgemäßen Fenster oder der erfindungsgemäßen Tür vorgesehen, dass das Dichtungsprofil eine Begrenzungswand aufweist, die sich entlang eines Randes des weiteren Profilelementes zu einer Scheibe des Verglasungsbauelementes erstreckt.

In einer bevorzugten Ausführungsform der Erfindung ist bei dem erfindungsgemäßen Fenster oder der erfindungsgemäßen Tür vorgesehen, dass der Klebebereich bereichsweise von einer Abschlussdichtung begrenzt wird, wobei die Abschlussdichtung mit dem weiteren Profilelement verbunden ist und sich entlang eines Randes des weiteren Profilelementes zu einer Scheibe des Verglasungsbauelementes (40) erstreckt.

In einer bevorzugten Ausführungsform der Erfindung ist bei dem erfindungsgemäßen Fenster oder der erfindungsgemäßen Tür vorgesehen, dass bereichsweise zwischen dem weiteren Profilelement und dem Verglasungsbauelement eine weitere Dichtung vorgesehen ist. Diese weitere Dichtung ist vorzugsweise eine Dichtung aus Polypropylen oder Polypropylenschaumstoff ist.

In einer bevorzugten Ausführungsform der Erfindung ist das erfindungsgemäße Fenster ein Fenster, das einen U_{frame}-Wert seitlich bzw. oben gemäß EN ISO 10077-2 von weniger als 0,61 W/(m²K) aufweist.

Durch die erfindungsgemäße Ausbildung des weiteren Profilelements bzw. Adapterprofils mit oder aus dem geschäumten Kunststoff wird eine deutliche Verbesserung des U_{frame}-Wertes gemäß EN ISO 10077-22 gegenüber einem analogen Fenster mit einem entsprechenden Profilelement aus herkömmlichem Kunststoff, Fiberglas, einer Siebdruckplatte oder einer Multiplexplatte erreicht. Dabei zeichnet sich das weitere Profilelement durch eine niedrige Wärmeleitfähigkeit bei hoher Festigkeit und Stabilität bei vergleichsweise geringem Gewicht aus. Daneben ist das weitere Profilelement bzw. das entsprechende Ausgangsmaterial vergleichsweise kostengünstig und mittels etablierter Techniken wie sägen, schneiden, fräsen und schleifen in einfacher Weise profilierbar und bearbeitbar.

Bei einem weiteren Profilelement in Form einer extrudierten und profilierten PVC-Schaumplatte aus dem geschäumten Kunststoff bzw. einer extrudierten und profilierten Integralschaumplatte aus dem geschäumten Kunststoff mit einer zumindest bereichsweise glatten homogenen Oberfläche kann das weitere Profilelement besonders einfach und zuverlässig mit dem Verglasungsbauelement verklebt werden.

Der Klebebereich ist vorteilhaft von dem weiteren Profilelement, dem Verglasungsbauelement, einem Hohlraum zwischen dem weiteren Profilelement und dem Verglasungsbauelement und einem oder mehreren Dichtungsprofilen begrenzt. Dadurch ist der Ort des Klebebereiches zumindest dreiseitig genau definiert und auch seine Dicke ist weitgehend vorgegeben bzw. über die Dimensionierung des Dichtungsprofils einstellbar. Dies führt zu einer qualitativ hochwertigen Verklebung mit gleichmäßiger Dicke der Klebeschicht. Vorzugsweise ist der Klebebereich in einer Ecke oder einer Umgebung einer Ecke, beispielsweise L-förmig in einer Ecke des vorgesehen, wobei die Ecke nur von dem weiteren Profilelement oder dem weiteren Profilelement und dem Rahmenprofil gebildet wird. In einer anderen Ausführungsform ist der Klebebereich ist nur auf der Innenseite des Verglasungsbauelementes vorgesehen, insbesondere L-förmig in der Ecke zwischen dem Verglasungsbauelement und dem weiterem Profilelement bzw. L-förmig in der Ecke zwischen dem Verglasungsbauelement einerseits und dem weiterem Profilelement und dem Rahmenprofil andererseits.

Das erfindungsgemäße Fenster bzw. die erfindungsgemäße Tür ist vorzugsweise ein Fenster oder eine Tür für ein Niedrigenergiehaus oder ein Passivhaus, d. h. im Fall des Fensters ein Fenster, das gemäß EN ISO 10077-2 und bezogen auf eine Fensterprüfgröße von 1230 x 1480 mm einen Wärmedurchgang Fenster (U_{window}) von < 0,69 W/(m²K), insbesondere < 0,64 W/(m²K) oder beispielsweise 0,63 W/(m²K), und einen Wärmedurchgang Rahmen (U_{frame}) seitlich und oben von < 0,65 W/(m²K), insbesondere < 0,63 W/(m²K) oder beispielsweise 0,61 W/(m²K) hat.

### Zeichnungen

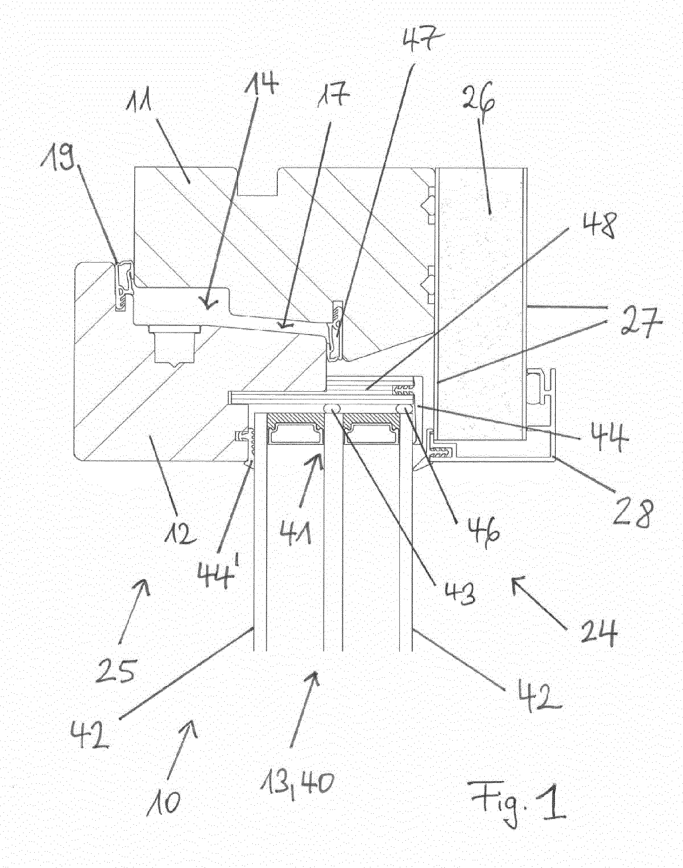

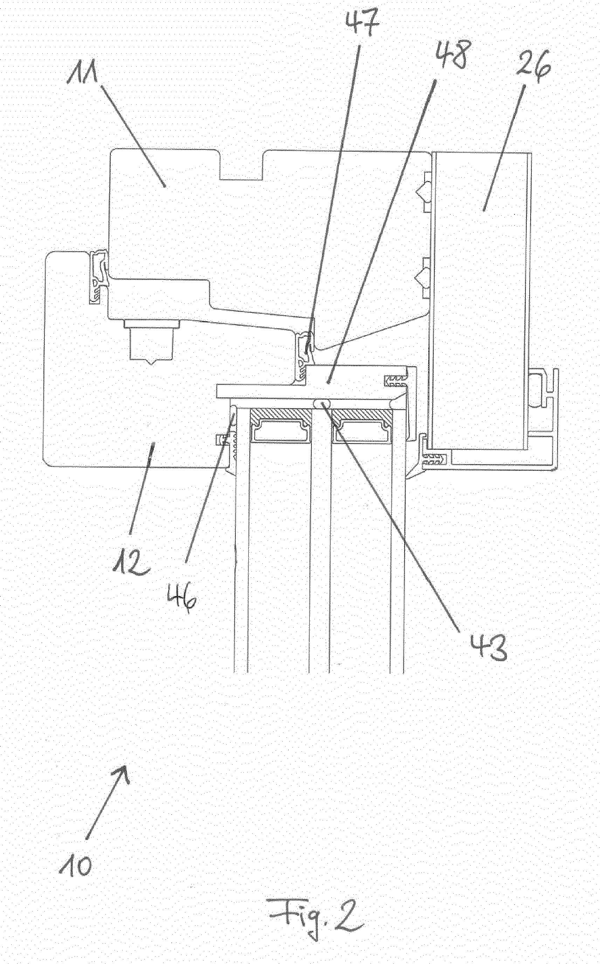

Die Erfindung wird anhand der Zeichnungen und der nachfolgend beschriebenen Ausführungsbeispiele näher erläutert. Es zeigt Figur 1 ein erstes Ausführungsbeispiel der Erfindung in Form eines Schnittes durch einen Teil eines Fensters und Figur 2 zeigt ein alternatives Ausführungsbeispiel der Erfindung in Form eines Schnittes durch einen Teil eines Fensters.

### Ausführungsbeispiele

Die Figur 1 erläutert ein Ausführungsbeispiel der Erfindung in Form eines Fensters 10 für ein Niedrigenergie oder Passivhaus, das gemäß EN ISO 10077-2 und bezogen auf eine Fensterprüfgröße von 1230 x 1480 mm und bezogen auf eine Fensterprüfgröße von 1230 x 1480 mm einen Wärmedurchgang Fenster (U_{window}) < 0,64 W/(m²K) oder beispielsweise 0,63 W/(m²K) und einen Wärmedurchgang Rahmen (U_{frame}) seitlich und oben von < 0,63 W/(m²K) oder beispielsweise 0,61 W/(m²K) hat. Die Figur 1 zeigt einen Teilbereich des Fensters 10 im Schnitt mit einem Blendrahmenprofil 11, einem Flügelrahmenprofil 12, einer Verglasung 13 bzw. einem Verglasungsbauelement 40 und einer Kammer 14 zwischen dem Blendrahmenprofil 11 und dem Flügelrahmenprofil 12. Die Kammer 14 ist in diesem Ausführungsbeispiel mittels einer ersten Dichtung 47 und einer zweiten Dichtung 19 zwischen dem Blendrahmenprofil 11 und dem Flügelrahmenprofil 12 geschlossen. Weiter ist das Verglasungsbauelement 40 über ein weiteres Profilelement 48, das auch als Adapterprofilelement bezeichnet werden kann, mit dem Flügelrahmenprofil 12 verbunden. Das weitere Profilelement 48 ist im erläuterten Beispiel aus einem geschäumten Kunststoff ausgebildet. Der geschäumte Kunststoff hat eine Wärmeleitfähigkeit in einem Bereich von 0,04 bis 0,08 W/mK oder in einem Bereich von 0,048 bis 0,07 W/mK, beispielsweise ca. 0,05 W/mK. Der geschäumte Kunststoff ist bevorzugt Polyvinylchlorid (PVC), d. h. das weitere Profilelement 48 besteht im erläuterten Beispiel aus einem PVC-Schaumplattenprofil aus dem geschäumten Kunststoff, insbesondere einer extrudierten und profilierten PVC-Schaumplatte aus dem geschäumten Kunststoff. Das PVC-Schaumplattenprofil ist vorzugsweise eine profilierte extrudierte PVC-Integralschaumplatte aus dem geschäumten Kunststoff. Derartige PVC-Integralschaumplatten, die nach dem Celuka-Verfahren hergestellt werden können, werden beispielsweise von der Fa. Veka AG, Sendenhorst, unter der Bezeichnung "Vekaplan S" in Stärken von 8 bis 30 mm, siehe http://www.vekaplan.de/vekaplan/divers/de/vekaplan_s_produkteigenschaften.htm, vertrieben. Daneben werden derartige PVC-Integralschaumplatten auch von der Fa. profine GmbH, Pirmasens, unter der Bezeichnung "KÖMACEL®" in Stärken von 4 bis 30 mm, siehe http://komasheets.com/produkte/koemacel/technische-daten_5, vertrieben. Bevorzugt werden hier Stärken von 8-13 mm für das weitere Profilelement 48 verwendet. Die verwendeten profilierten extrudierten PVC-Integralschaumplatten weisen vorzugsweise zumindest bereichsweise eine glatte homogene Oberfläche auf. Die Shore-Härte D nach DIN 53505 des verwendeten geschäumten Kunststoffs bzw. der verwendeten profilierten extrudierten PVC-Integralschaumplatten liegt vorzugsweise in einem Bereich von 50-80, besonders bevorzugt 72 bis 78 oder ca. 75. Der Elastizitätsmodul nach ISO 527-2 des verwendeten geschäumten Kunststoffs bzw. der verwendeten profilierten extrudierten PVC-Integralschaumplatten liegt vorzugsweise in einem Bereich von 700-1200 MPa wie bei ca. 800 MPa oder bei ca. 1050 MPa.

Auf der Innenseite 25 des Fensters 10 ist die Kammer 14 mittels der zweiten Dichtung 19 zwischen dem Blendrahmenprofil 11 und dem Flügelrahmenprofil 12 geschlossen. Die Dichtungen 47, 19 sind vorzugsweise übliche Gummidichtungen für Fenster des erläuterten Typs in der in Figur 1 näher gezeigten Form.

Das Blendrahmenprofil 11 und das Flügelrahmenprofil 12 können Massivholzprofile sein. Weiter können das Blendrahmenprofil 11 und das Flügelrahmenprofil 12 auch aus einem Furnierschichtholz, d. h. beispielsweise aus ca. 3 mm dicken einzelnen Schälfurnieren aus Nadelholz wie Fichte ausgebildet sein.

Auf der Außenseite 24 des Fensters 10 ist im erläuterten Beispiel eine ca. 27 mm dicke Dämmplatte 26 aus XPS, d. h. expandiertem Polystyrol, vorgesehen, die beiderseits mit einer ca. 1 mm bis 3 mm dünnen Deckschicht 27 insbesondere aus Fiberglas versehen, vorzugsweise verklebt ist, und die weiter mit einem vorzugsweise ebenfalls aufgeklebten Aluminiumprofil oder allgemeiner einem Abdeckprofil 28 (z. B. auch aus Kunststoff oder Kupfer) versehen ist. Die auf der dem Blendrahmenprofil 11 zugewandten Seite der Dämmplatte 26 vorgesehene Deckschicht 27 ist mit dem Blendrahmenprofil 11 verbunden, vorzugsweise erneut verklebt.

Die Figur 1 zeigt weiter, wie das weitere Profilelement 48 das Verglasungsbauelement 40 hält. Das Verglasungsbauelement 40 ist in an sich bekannter Weise als Mehrscheibenisolierglasbauelement mit drei oder mehr Scheiben 42 ausgebildet und weist einen Randverbund 41 auf. Die inneren Hohlräume des Verglasungsbauelementes 40 sind beispielsweise mit Argon gefüllt. Zwischen dem Verglasungsbauelement 40 und dem weiteren Profilelement 48 ist vorzugsweise bereichsweise eine weitere Dichtung 43, insbesondere eine weitere Dichtung 43 aus Polypropylen oder Polypropylenschaumstoff vorgesehen. Das Verglasungsbauelement 40 ist mit dem weiteren Profilelement 48 in einem oder mehreren Klebebereichen verklebt. Der Kleber ist vorzugsweise ein 2-Komponentenkleber, insbesondere auf Silikonbasis. Auf der Außenseite 24 des Fensters 10, wird der Übergangsbereich von dem weiteren Profilelement 48 zu dem Verglasungsbauelement 40 mit Hilfe einer Abschlussdichtung 44 abgedichtet, die an ihrem Ende eine Lippe aufweist, die mit der Scheibe 42 in Kontakt ist.

Das weitere Profilelement 48 ist wie gezeigt als im Wesentlichen L-förmig oder treppenstufenförmig ausgebildet.

Die weitere Dichtung 43 ist im Schnitt vorzugsweise in etwa mittig zwischen den äußeren Scheiben 42 des Verglasungsbauelementes 40 oder in etwa mittig aber in Richtung auf das Flügelrahmenprofil 12 (oder allgemein das Fensterprofilelement oder das Türprofilelement) versetzt zwischen den äußeren Scheiben 42 des Verglasungsbauelementes 40 vorgesehen. Das Flügelrahmenprofil 12 (oder allgemeiner das Fensterprofilelement oder das Türprofilelement) weist im erläuterten Beispiel eine Nut zur Aufnahme eines entsprechenden Bereiches des weiteren Profilelementes 48 auf. Dies erleichtert eine präzise Fertigung und Positionierung des weiteren Profilelementes 48 mit dem Verglasungsbauelement 40 relativ zu dem Flügelrahmenprofil 12 bei der Verklebung.

Die Abschlussdichtung 44 ist vorzugsweise eine relativ harte Abschlussdichtung 44 mit einer Härte in einem Bereich von 70 bis 90 Shore A, insbesondere 80 Shore A. Sie ist mit dem weiteren Profilelement 48 verbunden und erstreckt sich über die Grenzfläche zwischen dem Verglasungsbauelement 40 und dem weiterem Profilelement 48 hinaus in die Scheibe 42 des Verglasungsbauelementes 40 und berührt diese dort. Dazu weist die Abschlussdichtung 44 dort ein Dichtlippe auf. Die Abschlussdichtung 44 ist vorzugsweise aus Gummi ausgebildet und vorzugsweise in einer Nut des weiteren Profilelements 20 verankert.

Die beiden Scheiben 42 des Verglasungsbauelementes 40 und der Randverbund 41 schließen einen Hohlraum ein, der insbesondere mit einem Edelgas wie Argon (oder gegebenenfalls auch Krypton) gefüllt ist. Vorzugsweise weist das Verglasungsbauelement 40 mindestens drei Scheiben 42 auf, die mit dem Randverbund 41 mindestens zwei getrennte, insbesondere mit einem Edelgas wie Argon gefüllte Hohlräume einschließen. Das Verglasungsbauelement 40 ist im Bereich des Randverbundes 41 mit dem weiteren Profilelement 48 verbunden.

Die dritte Dichtung 47 in Figur 4 ist in dem Blendrahmenprofil 11 verankert und vorzugsweise so angebracht, dass sie keinen Kontakt zu dem weiteren Profilelement 48 hat. Gemäß Figur 1 ist ein Klebebereich 46 vorgesehen, der sich auf der der Außenseite 24 zugewandten Seite des weiteren Profilelements 48 in der von der Verglasung 13, der Abschlussdichtung 44 und dem weiteren Profilelement 48 gebildeten Ecke befindet. Dieser Klebebereich 46 ist dabei nicht um die Ecke umlaufend ausgebildet und ist vorzugsweise auch nicht in Kontakt mit der Abschlussdichtung 44, d. h. der Dichtungsbereich verbindet vorzugsweise nur die Verglasung 13 mit dem weiteren Profilelement 48. Zur Ausbildung des Dichtungsbereiches 46 kann ein Kleber wie ein 2-Komponentenkleber auf Silikonbasis eingesetzt werden. Alternativ oder zusätzlich zu dem Klebebereich 46 kann in Figur 1 ein weiterer Klebebereich auf der der Innenseite 25 zugewandten Seite des weiteren Profilelements 48 in der von der Verglasung 13, dem Flügelrahmenprofil 12 und dem weiteren Profilelement 48 gebildeten Ecke oder in der Umgebung dieser Ecke vorgesehen sein. Weiter befindet sich auf der Innenseite 25 zwischen der Verglasung 13 und dem Flügelrahmenprofil 12 eine innere Dichtung 44', die in einer Nut in dem Flügelrahmenprofil 12 eingesetzt ist und vorzugsweise nicht mit dem weiteren Profilelement 48 in Kontakt ist. Diese innere Dichtung 44' dichtet das Flügelrahmenprofil 12 gegenüber der Verglasung 13 ab.

Die Figur 2 erläutert ein alternatives Ausführungsbeispiel eines Fensters 10, wobei dieses Fenster in vielerlei Hinsicht analog zu Figur 1 aufgebaut ist, so dass hier nur die Unterschiede zwischen dem Ausführungsbeispiel gemäß Figur 1 und dem Ausführungsbeispiel gemäß Figur 2 erläutert werden sollen und in der Figur 1 gezeigte Bezugszeichen in Figur 2 der Übersichtlichkeit halber zum Teil nicht noch einmal eingezeichnet sind, sofern sie analoge Bauelemente bezeichnen.

Gegenüber Figur 1 ist in Figur 2 die dritte Dichtung 47 bereichsweise zwischen dem Flügelrahmenprofil 12, und dem weiteren Profilelement 48 und in Kontakt mit beiden vorgesehen. Bei geschlossenem Fenster ist in Figur 2 die dritte Dichtung 47 weiter vorzugsweise auch in Kontakt mit dem Blendrahmenprofil 11. Daneben befindet sich der Klebebereich 46 nun zwischen der Verglasung 13 und dem weiterem Profilelement 48 bzw. zwischen der Verglasung 13, dem weiterem Profilelement 48 und dem Flügelrahmenprofil 12.

Das weitere Profilelement 48 in dem Beispiel von Figur 2 ist aus einem geschäumten Kunststoff mit einer Wärmeleitfähigkeit von 0,11 W/mK ausgebildet. Vorzugsweise hat der geschäumte Kunststoff eine Wärmeleitfähigkeit in einem Bereich von 0,04 bis 0,08 W/mK oder in einem Bereich von 0,048 bis 0,07 W/mK, beispielsweise ca. 0,05 W/mK. Der geschäumte Kunststoff ist bevorzugt Polyvinylchlorid (PVC), d. h. das weitere Profilelement 48 besteht aus einem PVC-Schaumplattenprofil aus dem geschäumten Kunststoff, insbesondere einer extrudierten und profilierten PVC-Schaumplatte aus dem geschäumten Kunststoff. Das PVC-Schaumplattenprofil ist vorzugsweise eine profilierte extrudierte PVC-Integralschaumplatte aus dem geschäumten Kunststoff, wie sie unter der Bezeichnung "Vekaplan S" oder unter der Bezeichnung "KÖMACEL®" vertrieben werden. Bevorzugt werden hier Stärken von 8-13 mm für das weitere Profilelement 20 verwendet. Die verwendeten profilierten extrudierten PVC-Integralschaumplatten weisen vorzugsweise zumindest bereichsweise eine glatte homogene Oberfläche auf. Die Shore-Härte D nach DIN 53505 des verwendeten geschäumten Kunststoffs bzw. der verwendeten profilierten extrudierten PVC-Integralschaumplatten liegt vorzugsweise in einem Bereich von 50 bis 80, besonders bevorzugt 72 bis 78 oder ca. 75. Der Elastizitätsmodul nach ISO 5272 des verwendeten geschäumten Kunststoffs bzw. der verwendeten profilierten extrudierten PVC-Integralschaumplatten liegt vorzugsweise in einem Bereich von 700-1200 MPa wie bei ca. 800 MPa oder bei ca. 1050 MPa.

## Patentansprüche

1. Fenster oder Tür, insbesondere für ein Niedrigenergiehaus oder ein Passivhaus, mit einem Fensterprofilelement (11, 12) bzw. einem Türprofilelement, einem weiteren Profilelement (48) und mindestens einem Verglasungsbauelement (40), wobei das Verglasungsbauelement (40) mindestens zwei Scheiben (42) aufweist, die über einen Randverbund (41) miteinander verbunden sind, wobei das Verglasungsbauelement (40) mit dem weiteren Profilelement (48) und das weitere Profilelement (48) mit dem Fensterprofilelement (11, 12) bzw. dem Türprofilelement verbunden ist, **dadurch gekennzeichnet, dass** das weitere Profilelement (48) einen geschäumten Kunststoff mit einer Wärmeleitfähigkeit in einem Bereich von 0,04 bis 0,08 W/mK aufweist und dass das Verglasungsbauelement (40) mit dem weiteren Profilelement (48) in mindestens einem Klebebereich (46) verklebt ist.

2. Fenster oder Tür nach Anspruch 1, wobei der geschäumte Kunststoff eine Wärmeleitfähigkeit in einem Bereich von 0,048 bis 0,07 W/mK, aufweist.

3. Fenster oder Tür nach Anspruch 1 oder 2, wobei der geschäumte Kunststoff Polyvinylchlorid (PVC) ist.

4. Fenster oder Tür nach mindestens einem der vorangehenden Ansprüche, wobei das weitere Profilelement (48) aus einem PVC-Schaumplattenprofil aus dem geschäumten Kunststoff, insbesondere einer extrudierten und profilierten PVC-Schaumplatte aus dem geschäumten Kunststoff, besteht oder wobei das weitere Profilelement (48) eine profilierte extrudierte PVC-Integralschaumplatte aus dem geschäumten Kunststoff ist.

5. Fenster oder Tür nach mindestens einem der vorangehenden Ansprüche, wobei die profilierte extrudierte PVC-Integralschaumplatte zumindest bereichsweise eine glatte homogene Oberfläche aufweist.

6. Fenster oder Tür nach mindestens einem der vorangehenden Ansprüche, wobei der geschäumte Kunststoff und/oder das PVC-Schaumplattenprofil eine Shore-Härte D in einem Bereich von 50 bis 80, insbesondere 72 bis 78 oder ca. 75, aufweist.

7. Fenster oder Tür nach mindestens einem der vorangehenden Ansprüche, wobei der geschäumte Kunststoff und/oder das PVC-Schaumplattenprofil einen Elastizitätsmodul in einem Bereich von 700-1200 MPa, insbesondere ca. 800 MPa oder ca. 1050 MPa, aufweist.

8. Fenster oder Tür nach mindestens einem der vorangehenden Ansprüche, wobei das weitere Profilelement (48) im Wesentlichen treppenstufenförmig ausgebildet ist.

9. Fenster oder Tür nach Anspruch 1, wobei der Klebebereich (46) von dem weiteren Profilelement (48), dem Verglasungsbauelement (40), einem Hohlraum zwischen dem weiteren Profilelement (48) und dem Verglasungsbauelement (40), und einem insbesondere mit dem Fensterprofilelement (11, 12) bzw. dem Türprofilelement verbundenen Dichtungsprofil (44) begrenzt ist.

10. Fenster oder Tür nach Anspruch 1 oder 9, wobei der Klebebereich (46) in einer Ecke oder einer Umgebung einer Ecke des weiteren Profilelementes (48) vorgesehen und insbesondere L-förmig ausgebildet ist.

11. Fenster oder Tür nach mindestens einem der vorangehenden Ansprüche, wobei der Klebebereich (46) bereichsweise von einem Dichtungsprofil begrenzt wird, wobei das Dichtungsprofil mit dem Fensterprofilelement (11, 12) bzw. dem Türprofilelement verbunden ist.

12. Fenster oder Tür nach mindestens einem der vorangehenden Ansprüche, wobei im Fall eines feststehenden Fensters das Fensterprofilelement ein Blendrahmenprofil (11) ist, wobei im Fall eines öffenbaren Fensters (10) das Fensterprofilelement ein Flügelrahmenprofil (11) ist, und wobei im Fall der Tür das Türprofilelement ein Türblatt oder ein Türflügelprofil ist.

13. Fenster nach mindestens einem der vorangehenden Ansprüche wobei das Fenster einen Uframe-Wert seitlich bzw. oben gemäß EN ISO 10077-2 von weniger als 0,65 W/(m²K), insbesondere weniger als 0,63 W/(m²K) aufweist.

14. Fenster nach mindestens einem der vorangehenden Ansprüche wobei das Fenster einen U_{window}-Wert gemäß EN ISO 10077-2 von weniger als 0,69 W/(m²K), insbesondere weniger als 0,64 aufweist W/(m²K).

## Claims

1. Window or door, in particular for a low-energy house or a passive house, with a window profile element (11, 12) or a door profile element respectively, a further profile element (40) and at least one glazing construction element (40), wherein the glazing construction element (40) comprises at least two panes (42) that are interconnected via an edging (41), wherein the glazing construction element (40) is attached to the further profile element (40) und the further profile element (40) is attached to the window profile element (11, 12) or the door profile element respectively, **characterised in that** the further profile element (48) comprises a foamed plastic having a thermal conductivity in a range of from 0.04 to 0.08 W/mK and **in that** the glazing construction element (40) is glued together with the further profile element (40) in at least one glue area (46).

2. Window or door in accordance with claim 1, wherein the foamed plastic has a thermal conductivity in a range of from 0.048 to 0.07 W/mK.

3. Window or door in accordance with claim 1 or 2, wherein the foamed plastic is polyvinyl chloride (PVC).

4. Window or door in accordance with at least one of the previous claims, wherein the further profile element (48) consists of a PVC-foam panel profile of the foamed plastic, in particular of an extruded or profiled PVC-foam panel profile of the foamed plastic, or wherein the further profile element (48) is a profiled extruded PVC-integral foam panel of the foamed plastic.

5. Window or door in accordance with at least one of the previous claims, wherein the profiled extruded PVC-integral foam panel has at least in some areas a smooth homogeneous surface.

6. Window or door in accordance with at least one of the previous claims, wherein the foam plastic and/or the PVC-foam panel profile has a Shore hardness D in a range of from 50 to 80, in particular 72 to 78 or about 75.

7. Window or door in accordance with at least one of the previous claims, wherein the foam plastic and/or the PVC-foam panel profile has a modulus of elasticity in a range of from 700-1200 MPa, in particular about 800 MPa or about 1050 MPa.

8. Window or door in accordance with at least one of the previous claims, wherein the further profile element (40) is substantially stair tread shaped.

9. Window or door in accordance with claim 1, wherein the glue area (46) is confined by the further profile element (48), the glazing construction element (40), a cavity between the further profile element (48) and the glazing construction element (40) and by a sealing profile (44) that is in particular attached to the window profile element (11, 12) or to the door profile element respectively.

10. Window or door in accordance with claim 1 or 9, wherein the glue area (46) is provided in a corner or in the surroundings of a corner of the further profile element (48) and is in particular L-shaped.

11. Window or door in accordance with at least one of the previous claims, wherein the glue area (46) is in some area delimited by a sealing profile, wherein the sealing profile is attached to the window profile element (11, 12) or to the door profile element respectively.

12. Window or door in accordance with at least one of the previous claims, wherein in case of a fixed window, the window profile element is a blind frame profile (11), wherein in case of a window (10) that can be opened, the window profile element is a window frame element (11), and wherein in case of the door, the door profile element is a door leaf or a door frame element.

13. Window in accordance with at least one of the previous claims, wherein the window has a U_{frame} value laterally or up in accordance with EN ISO 10077-2 of less than 0.65 W/(m²K), in particular less than 0.63 W/(m²K).

14. Window in accordance with at least one of the previous claims, wherein the window has a U_{window} value in accordance with EN ISO 10077-2 of less than 0.69 W/(m²K), in particular less than 0.64 W/(m²K).

## Revendications

1. Fenêtre ou porte, en particulier pour maison basse consommation ou maison passive, comportant un élément profilé de fenêtre (11, 12) ou, respectivement, un élément profilé de porte, un autre élément profilé (48) et au moins un composant de vitrage (40) comprenant au moins deux vitres (42) reliés entre eux par un joint périphérique (41), le composant de vitrage (40) étant relié à l'autre élément profilé (48) et l'autre élément profilé (48) étant relié à l'élément profilé de fenêtre (11, 12) ou, respectivement, l'élément profilé de porte, **caractérisé en ce que** l'autre élément profilé (48) comprend une matière plastique moussée ayant une conductivité thermique dans la plage de 0,04 à 0,08 W/mK et **en ce que** le composant de vitrage (40) est collé avec l'autre élément profilé (48) dans au moins une zone de collage (46).

2. Fenêtre ou porte selon la revendication 1, dans laquelle la matière plastique moussée présente une conductivité thermique dans la plage de 0,048 à 0,07 W/mK.

3. Fenêtre ou porte selon la revendication 1 ou 2, dans laquelle la matière plastique moussée est du polychlorure de vinyle (PVC).

4. Fenêtre ou porte selon au moins l'une des revendications précédentes, dans laquelle l'autre élément profilé (48) est constitué par un panneau moussé profilé en PVC en la matière plastique moussée, en particulier par un panneau moussé en PVC extrudé et profilé en la matière plastique moussée, ou dans laquelle l'autre élément profilé (48) est un panneau en mousse intégrale en PVC profilé et extrudé en la matière plastique moussée.

5. Fenêtre ou porte selon au moins l'une des revendications précédentes, dans laquelle le panneau profilé et extrudé en mousse intégrale en PVC comporte au moins par endroits une surface lisse et homogène.

6. Fenêtre ou porte selon au moins l'une des revendications précédentes, dans laquelle la matière plastique moussée et/ou le profilé en forme d'un panneau moussé en PVC présente une dureté Shore D dans la plage de 50 à 80, en particulier 72 à 75 ou environ 75.

7. Fenêtre ou porte selon au moins l'une des revendications précédentes, dans laquelle la matière plastique moussée et/ou le profilé en forme d'un panneau moussé en PVC présente un module d'élasticité dans la plage de 700-1200 MPa, en particulier environ 800 MPa ou environ 1050 MPa.

8. Fenêtre ou porte selon au moins l'une des revendications précédentes, dans laquelle l'autre élément profilé (48) est essentiellement en forme de marche d'escalier.

9. Fenêtre ou porte selon au moins l'une des revendications précédentes, dans laquelle la zone de collage (46) est délimitée par l'autre élément profilé (48), le composant de vitrage (40), une cavité entre l'autre élément profilé (48) et le composant de vitrage (40) et par un profilé d'étanchéité, qui est en particulier relié avec l'élément profilé de fenêtre (11, 12) ou, respectivement, l'élément profilé de porte.

10. Fenêtre ou porte selon la revendication 1 ou 9, dans laquelle la zone de collage (46) est établie dans un coin ou un environnement d'un coin de l'autre élément profilé (48) et est en particulier en forme de L.

11. Fenêtre ou porte selon au moins l'une des revendications précédentes, dans laquelle la zone de collage (46) est délimitée par endroits par un profilé d'étanchéité, le profilé d'étanchéité étant relié avec l'élément profilé de fenêtre (11, 12) ou, respectivement, l'élément profilé de porte.

12. Fenêtre ou porte selon au moins l'une des revendications précédentes, dans laquelle dans le cas d'une fenêtre fixe, l'élément profilé de fenêtre est un profilé de châssis dormant (11), dans laquelle dans le cas d'une fenêtre ouvrable, l'élément profilé de fenêtre est un profilé de châssis de battant (11), et dans laquelle dans le cas d'une porte, l'élément profilé de porte est un panneau de porte ou un profilé de battant de porte.

13. Fenêtre selon au moins l'une des revendications précédentes, dans laquelle la fenêtre présente une valeur U_{frame} latérale ou en haut selon EN ISO 10077-2 inférieure à 0,65 W/(m²K), en particulier inférieure à 0,63 W/(m²K).

14. Fenêtre selon au moins l'une des revendications précédentes, dans laquelle la fenêtre présente une valeur U_{window} selon EN ISO 10077-2 inférieure à 0,69 W/(m²K), en particulier inférieure à 0,64 W/(m²K).
